(19) Europäisches Patentamt / European Patent Office / Office européen des brevets

(11) **EP 3 780 219 B1**

(12) **EUROPEAN PATENT SPECIFICATION**

(45) Date of publication and mention
of the grant of the patent:
**22.06.2022 Bulletin 2022/25**

(21) Application number: **18913393.7**

(22) Date of filing: **04.04.2018**

(51) International Patent Classification (IPC):
*H01M 10/0525* (2010.01)    *H01M 4/131* (2010.01)
*H01M 4/485* (2010.01)    *H01M 50/491* (2021.01)
*H01M 4/02* (2006.01)

(52) Cooperative Patent Classification (CPC):
**H01M 50/491; H01M 4/131; H01M 50/466;
H01M 50/489;** H01M 50/443; H01M 2004/021;
Y02E 60/10

(86) International application number:
**PCT/JP2018/014450**

(87) International publication number:
**WO 2019/193690 (10.10.2019 Gazette 2019/41)**

(54) **NONAQUEOUS ELECTROLYTE BATTERY, AND BATTERY PACK**

BATTERIE MIT NICHTWÄSSRIGEM ELEKTROLYT UND BATTERIEPACK

BATTERIE À ÉLECTROLYTE NON AQUEUX ET BLOC BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2021 Bulletin 2021/07**

(73) Proprietor: **KABUSHIKI KAISHA TOSHIBA
Minato-ku
Tokyo 105-8001 (JP)**

(72) Inventors:
• **NAKAZAWA, Toshitada
Kawasaki-shi, Kanagawa 212-0013 (JP)**
• **YAMAMOTO, Dai
Kawasaki-shi, Kanagawa 212-0013 (JP)**
• **SHIKOTA, Masataka
Kawasaki-shi, Kanagawa 212-0013 (JP)**
• **HASEGAWA, Aki
Kawasaki-shi, Kanagawa 212-0013 (JP)**

(74) Representative: **Hoffmann Eitle
Patent- und Rechtsanwälte PartmbB
Arabellastraße 30
81925 München (DE)**

(56) References cited:
**WO-A1-2013/054888    WO-A1-2013/054889
WO-A1-2014/046094    JP-A- 2009 081 048
JP-A- 2015 170 578    US-A1- 2009 081 534
US-A1- 2017 187 022**

**Description**

FIELD

Embodiments described herein relate generally to a nonaqueous electrolyte battery and a battery pack.

BACKGROUND

A nonwoven fabric made of polyolefin, cellulose fiber or the like has been used as a separator of nonaqueous electrolyte batteries such as a lithium battery and a lithium ion battery. In order to meet the demand for higher capacity of the nonaqueous electrolyte batteries, reduction of the thickness of the separator has been under consideration. However, if the thickness of the nonwoven fabric separator is reduced, the positive electrode and the negative electrode are likely to come into contact with each other when the mesh of the separator is too coarse, increasing the possibility of the occurrence of an internal short circuit. On the other hand, when the mesh of the separator is too dense, the internal resistance tends to increase.

CITATION LIST

PATENT LITERATURE

PATENT LITERATURE 1: Japanese Patent No. 4445537
PATENT LITERATURE 2: Japanese Patent No. 6258082

NON PATENT LITERATURE

NON PATENT LITERATURE 1: Jimbo Genji et al., "Fine Particle Handbook", Asakura Shoten, September 1991, pp. 151 - 152
NON PATENT LITERATURE 2: Hayakawa Sohachiro, "Powder Physical Property Measurement Method", Asakura Shoten, October 1973, pp. 257 - 259

SUMMARY

TECHNICAL PROBLEM

An object of the invention is to provide a nonaqueous electrolyte battery having low internal resistance and capable of suppressing self-discharge.

SOLUTION TO PROBLEM

According to one embodiment, a nonaqueous electrolyte battery is provided. The nonaqueous electrolyte battery includes a positive electrode, a negative electrode, a separator, and a nonaqueous electrolyte. The negative electrode includes a negative electrode material layer. The negative electrode material layer includes a titanium-containing oxide as a negative electrode active material. The separator is positioned at least between the positive electrode and the negative electrode. A logarithmic differential pore volume distribution curve of the separator obtained by a mercury intrusion method includes a first peak and a second peak. The first peak is a local maximum value where the pore diameter is in the range of 0.02 $\mu$m or more and 0.15 $\mu$m or less. The second peak is a local maximum value where the pore diameter is in the range of 1.5 $\mu$m or more and 30 $\mu$m or less. A ratio $P2_l/P1_l$ of an intensity $P2_l$ of the second peak to an intensity $P1_l$ of the first peak is more than 1.00 and not more than 3.00. A pore specific surface area of the separator obtained by the mercury intrusion method is 70 m$^2$/g or more.

According to another embodiment, a battery pack is provided. The battery pack includes the nonaqueous electrolyte battery according to the embodiment.

BRIEF DESCRIPTION OF THE DRAWINGS

FIG. 1 is an exploded perspective view of an example of a nonaqueous electrolyte battery according to a first embodiment.
FIG. 2 is a partially unfolded perspective view of an electrode group included in the nonaqueous electrolyte battery shown in FIG. 1.
FIG. 3 is an exploded perspective view of an example of a battery pack according to a second embodiment.
FIG. 4 is a block diagram showing an electric circuit of the battery pack shown in FIG. 3.
FIG. 5 is a graph showing a logarithmic differential pore volume distribution curve of a separator according to an example.
FIG. 6 is a graph showing a logarithmic differential pore volume distribution curve of a separator according to a comparative example.

DETAILED DESCRIPTION

(First Embodiment)

According to a first embodiment, a nonaqueous electrolyte battery is provided. The nonaqueous electrolyte battery includes a positive electrode, a negative electrode, a separator, and a nonaqueous electrolyte. The negative electrode includes a negative electrode material layer. The negative electrode material layer includes a titanium-containing oxide as a negative electrode active material. The separator is positioned at least between the positive electrode and the negative electrode. A logarithmic differential pore volume distribution curve of the separator obtained by a mercury intrusion method includes a first peak and a second peak. The first peak is a local maximum value where the pore diameter is in the range of 0.02 $\mu$m or more and 0.15 $\mu$m or less. The second peak is a local maximum value where the pore diameter is in the range of 1.5 $\mu$m or more and 30 $\mu$m or less. A ratio $P2_I/P1_I$ of an intensity $P2_I$ of the second peak to an intensity $P1_I$ of the first peak is more than 1.00 and not more than 3.00. The pore specific surface area of the separator obtained by the mercury intrusion method is 70 m$^2$/g or more.

It can be said that the separator included in the first embodiment includes pores having a relatively small pore diameter of 0.02 $\mu$m or more and 0.15 $\mu$m or less and pores having a relatively large pore diameter of 1.5 $\mu$m or more and 30 $\mu$m or less in an appropriate balance. The titanium-containing oxide contained as a negative electrode active material in the negative electrode material layer may be an insulator having very low electron conductivity in a state where lithium ions are not inserted thereinto. Since the nonaqueous electrolyte battery according to the first embodiment includes such a separator and negative electrode active material, both low internal resistance and suppression of self-discharge can be achieved.

The nonaqueous electrolyte battery according to the first embodiment will be described in detail below. The nonaqueous electrolyte battery according to the first embodiment includes a positive electrode, a negative electrode, a separator, and a nonaqueous electrolyte.

The positive electrode may include a positive electrode current collector and a positive electrode material layer (positive electrode active material-containing layer) supported on either one or both surfaces of the positive electrode current collector.

The positive electrode material layer may include a positive electrode active material. The positive electrode material layer may further contain a conductive agent and a binder, as necessary.

The positive electrode current collector may include a portion that does not have the positive electrode material layer supported on its surface. The positive electrode material layer-free portion of the positive electrode current collector can serve as a positive electrode tab. Alternatively, the positive electrode may include a positive electrode tab separate from the positive electrode current collector.

The negative electrode may include a negative electrode current collector and a negative electrode material layer (negative electrode active material-containing layer) supported on either one or both surfaces of the negative electrode current collector.

The negative electrode material layer may include a negative electrode active material. The negative electrode material layer may further contain a conductive agent and a binder, as necessary.

The negative electrode current collector may include a portion that does not have the negative electrode material layer supported on its surface. This portion can serve as a negative electrode tab. Alternatively, the negative electrode may include a negative electrode tab separate from the negative electrode current collector.

The separator is positioned between the positive electrode and the negative electrode. Thus, the positive electrode material layer and the negative electrode material layer can face each other with the separator interposed therebetween.

The positive electrode, the negative electrode, and the separator can constitute an electrode group. The electrode group may have various structures. For example, the electrode group may have a wound structure. The wound structure includes a flat shape and a cylindrical shape. The wound electrode group can be obtained by, for example, stacking the separator, the positive electrode, the separator, and the negative electrode in the mentioned order to form a stack, and winding the stack so that, for example, the negative electrode is located on the outer side.

Such an electrode group may be impregnated with the nonaqueous electrolyte.

The nonaqueous electrolyte battery according to the embodiment may further include a positive electrode terminal and a negative electrode terminal.

A part of the positive electrode terminal is electrically connected to a part of the positive electrode, whereby the positive electrode terminal can serve as a conductor for electrons to move between the positive electrode and an external circuit. The positive electrode terminal can be connected to, for example, the positive electrode current collector, particularly the positive electrode tab. Likewise, a part of the negative electrode terminal is electrically connected to a part of the negative electrode, whereby the negative electrode terminal can serve as a conductor for electrons to move between the negative electrode and an external terminal. The negative electrode terminal can be connected to, for example, the negative electrode current collector, particularly the negative electrode tab.

The nonaqueous electrolyte battery according to the embodiment may further include a container member. The container member can accommodate the electrode group and the nonaqueous electrolyte. A part of each of the positive electrode terminal and the negative electrode terminal may be extended from the container member.

Hereinafter, each member included in the nonaqueous electrolyte battery according to the embodiment will be described.

1) Negative Electrode

For example, a metal foil or an alloy foil is used as the negative electrode current collector. The thickness of the current collector is preferably 20 $\mu$m or less, and more preferably 15 $\mu$m or less. Examples of the metal foil include a copper foil and an aluminum foil. The aluminum foil preferably has a purity of 99% by mass or more. Examples of the alloy foil include a stainless steel foil and an aluminum alloy foil. The aluminum alloy in the aluminum alloy foil preferably includes at least one element selected from the group consisting of magnesium, zinc, and silicon. The content of transition metals such as iron, copper, nickel, and chromium among the alloy components is preferably 1% by mass or less.

The negative electrode material layer includes a negative electrode active material. A titanium-containing oxide is used as the negative electrode active material. The titanium-containing oxide may be an insulator having very low electron conductivity in a state where lithium ions are not inserted thereinto, that is, in a discharged state. The titanium-containing oxide has electron conductivity in a state where lithium ions are inserted thereinto, that is, in a charged state. Since the battery according to the first embodiment includes the negative electrode active material that may be an insulator in a discharged state, as described above, an internal short circuit is less likely to occur even when, for example, the positive electrode and the negative electrode come into contact with each other due to deformation of the separator or the like.

Examples of the crystal structure of the titanium-containing oxide include orthorhombic, spinel-type, anatase-type, rutile-type, bronze-type, monoclinic, and ramsdellite crystal structures.

Examples of the orthorhombic titanium-containing oxide include sodium-niobium-titanium composite oxides. Examples of the sodium-niobium-titanium composite oxides include sodium-containing niobium-titanium composite oxides represented by the general formula: $Li_{2+v}Na_{2-w}M1_xTi_{6-y-z}Nb_yM2_zO_{14+\delta}$ ($0 \leq v \leq 4$, $0 < w < 2$, $0 \leq x < 2$, $0 < y < 6$, $0 \leq z < 3$, $y+z < 6$, $-0.5 \leq \delta \leq 0.5$, M1 includes at least one selected from Cs, K, Sr, Ba, and Ca, and M2 includes at least one selected from Zr, Sn, V, Ta, Mo, W, Fe, Co, Mn, and Al).

The composition of the anatase-type, rutile-type, bronze-type, or monoclinic titanium-containing oxide can be represented by $TiO_2$.

Examples of the spinel-type titanium-containing oxides include spinel-type lithium-titanium composite oxides. Examples of the spinel-type lithium-titanium composite oxides include lithium titanates such as $Li_{4+x}Ti_5O_{12}$ (x varies in the range of $0 \leq x \leq 3$ due to charge-discharge reaction). The spinel-type lithium-titanium composite oxide may be used alone, or a plurality of other active materials may be mixed. Examples of the negative electrode active materials to be mixed include lithium compounds that allow lithium to be inserted and extracted. Examples of such lithium compounds include lithium oxides, lithium sulfides, and lithium nitrides. They include metal compounds which do not include lithium in an uncharged state but come to include lithium by charging.

Examples of the ramsdellite-type titanium-containing oxides include $Li_{2+y}Ti_3O_7$ (y varies in the range of $-1 \leq y \leq 3$ due to charge-discharge reaction).

The titanium-containing oxides may be metal composite oxides containing titanium (Ti) and another metal. Examples of the metal other than titanium include at least one element selected from the group consisting of P, V, Sn, Cu, Ni, Nb, and Fe.

Examples of the metal composite oxides include $TiO_2$-$P_2O_5$, $TiO_2$-$V_2O_5$, $TiO_2$-$P_2O_5$-$SnO_2$, $TiO_2$-$P_2O_5$-MeO (Me is at least one element selected from the group consisting of Cu, Ni, and Fe), and $Nb_2TiO_7$. The metal composite oxides preferably have a microstructure with low crystallinity, in which a crystal phase and an amorphous phase coexist or an amorphous phase exists alone. Such a microstructure can greatly improve the cycle performance.

The negative electrode active material may include only the titanium-containing oxide described above or other materials. Examples of the other materials include carbonaceous materials (e.g., graphite, hard carbon, soft carbon, and graphene), sulfides, lithium nitrides, amorphous tin oxides such as $SnB_{0.4}P_{0.6}O_{3.1}$, tin silicon oxides such as $SnSiO_3$, silicon oxides such as SiO, and tungsten oxides such as $WO_3$ that allow the occluding and releasing of lithium ions. One or more types of negative electrode active material may be used.

The titanium-containing oxides, the amorphous tin oxides, the tin silicon oxides, the silicon oxides, and the tungsten oxides do not include lithium ions at the time of oxide synthesis, but can include lithium ions by charging.

Examples of the sulfides include titanium sulfides such as $TiS_2$, molybdenum sulfides such as $MoS_2$, and iron sulfides such as FeS, $FeS_2$, and $Li_xFeS_2$ ($0 \leq x \leq 2$).

Examples of the lithium nitrides include lithium cobalt nitrides (e.g., $Li_xCo_yN$, where $0 < x < 4$ and $0 < y < 0.5$).

The negative electrode material layer may include a conductive agent and a binder in addition to the negative electrode active material.

Examples of the conductive agent include carboncontaining materials (acetylene black, ketjen black, graphite, and the like) and metal powders.

Examples of the binder include polytetrafluoroethylene (PTFE), polyvinylidene fluoride (PVdF), fluorine-based rubber, and styrene-butadiene rubber.

The weight per unit area of the negative electrode material layer is preferably in the range of 10 g/m$^2$ or more and 300 g/m$^2$ or less. A more preferred range is 20 g/m$^2$ or more and 200 g/m$^2$ or less.

The density of the negative electrode material layer is preferably in the range of 1.5 g/cm$^3$ or more and 3.2 g/cm$^3$ or less. A more preferred range is 1.8 g/cm$^3$ or more and 2.5 g/cm$^3$ or less.

The negative electrode can be produced by, for example, adding the conductive agent and the binder to a powdery negative electrode active material, suspending the aforementioned in an appropriate solvent, applying the suspension (slurry) to the current collector, and drying and pressing the result to form a belt-shaped electrode.

The mixing ratio of the negative electrode active material, the conductive agent, and the binder is preferably as follows: the negative electrode active material in the range of 73% to 98% by mass, the conductive agent in the range of 0% to 20% by mass, and the binder in the range of 2% to 7% by mass.

2) Positive Electrode

Examples of the positive electrode active material include various oxides and sulfides. Examples thereof include manganese dioxide ($MnO_2$), iron oxides, copper oxides, nickel oxides, lithium-manganese composite oxides (e.g., $Li_xMn_2O_4$ or $Li_xMnO_2$), lithium-nickel composite oxides (e.g., $Li_xNiO_2$), lithium-cobalt composite oxides (e.g., $Li_xCoO_2$), lithium-nickel-cobalt composite oxides (e.g., $Li_xNi_{1-y-z}CO_yM_zO_2$ (M is at least one element selected from the group consisting of Al, Cr, and Fe, $0 \leq y \leq 0.5$, $0 \leq z \leq 0.1$)), lithium-manganese-cobalt composite oxides (e.g., $Li_xMn_{1-y-z}CO_yM_zO_2$ (M is at least one element selected from the group consisting of Al, Cr, and Fe, and $0 \leq y \leq 0.5$ and $0 \leq z \leq 0.1$)), lithium-manganese-nickel composite compounds (e.g., $Li_xMn_{1/2}Ni_{1/2}O_2$), spinel-type lithium-manganese-nickel composite oxides (e.g., $Li_xMn_{2-y}Ni_yO_4$), lithium phosphates having an olivine structure (e.g., $Li_xFePO_4$, $Li_xFe_{1-y}Mn_yPO_4$, $Li_xCoPO_4$), ferrous sulfates (e.g., $Fe_2(SO_4)_3$), vanadium oxides (e.g., $V_2O_5$), and $Li_xNi_{1-a-b}CO_aMn_bM_cO_2$ ($0.9 < \times \leq 1.25$, $0 < a \leq 0.4$, $0 \leq b \leq 0.45$, $0 \leq c \leq 0.1$, where M represents at least one element selected from the group consisting of Mg, Al, Si, Ti, Zn, Zr, Ca, and Sn). Examples of the positive electrode active material also include conductive polymer materials such as polyaniline and polypyrrole, disulfide-based polymer materials, organic materials and inorganic materials such as sulfur (S) and carbon fluoride. Where a preferred range of the symbols x, y, and z is not specified above, the range thereof is preferably 0 or more and 1 or less.

One or more types of positive electrode active material may be used.

Examples of the conductive agent include carbon black, graphite, graphene, fullerenes, and coke. Among them, carbon black and graphite are preferred. Examples of the carbon black include acetylene black, ketjen black, and furnace black.

Examples of the binder include polytetrafluoroethylene (PTFE), polyvinylidene fluoride (PVdF), polyacrylic acid, and fluorine-based rubber.

The positive electrode current collector is preferably made of an aluminum foil or an aluminum alloy foil. The average crystal grain size of the aluminum foil and the aluminum alloy foil is preferably 50 $\mu$m or less. More preferably, it is 30 $\mu$m or less. Still more preferably, it is 5 $\mu$m or less. When the average crystal grain size is 50 $\mu$m or less, the strength of the aluminum foil or the aluminum alloy foil can be dramatically increased, and the positive electrode can be densified at a high pressing pressure, allowing the battery capacity to increase.

The thickness of the current collector is 20 $\mu$m or less, more preferably 15 $\mu$m or less. The purity of the aluminum foil is preferably 99% by mass or more. The aluminum alloy preferably includes one or more elements selected from the group consisting of magnesium, zinc, and silicon. On the other hand, the content of transition metals such as iron, copper, nickel, and chromium is preferably 1% by mass or less.

The weight per unit area of the positive electrode material layer is preferably in the range of 10 $g/m^2$ or more and 300 $g/m^2$ or less. A more preferred range is 20 $g/m^2$ or more and 220 $g/m^2$ or less.

The density of the positive electrode material layer is preferably in the range of 2.0 $g/cm^3$ or more and 4.5 $g/cm^3$ or less. A more preferred range is 2.8 $g/cm^3$ or more and 4.0 $g/cm^3$ or less.

The positive electrode is produced by, for example, adding the conductive agent and the binder to the positive electrode active material, suspending the aforementioned in an appropriate solvent, applying the suspension to the current collector such as an aluminum foil, and drying and pressing the result to form a belt-shaped electrode.

The mixing ratio of the positive electrode active material, the conductive agent, and the binder is preferably set as follows: the positive electrode active material in the range of 80% to 95% by mass, the conductive agent in the range of 3% to 18% by mass, and the binder in the range of 2% to 7% by mass.

3) Nonaqueous Electrolyte

The nonaqueous electrolyte may include a nonaqueous solvent and an electrolyte salt dissolved in the nonaqueous solvent. The nonaqueous solvent may include a polymer.

Examples of the electrolyte salt include lithium salts such as $LiPF_6$, $LiBF_4$, $Li(CF_3SO_2)_2N$ (lithium bistrifluoromethanesulfonylamide; commonly referred to as LiTFSI), $LiCF_3SO_3$ (commonly referred to as LiTFS), $Li(C_2F_5SO_2)_2N$ (lithium bispentafluoroethanesulfonylamide; commonly referred to as LiBETI), $LiClO_4$, $LiAsF_6$, $LiSbF_6$, lithium bisoxalatoborate ($LiB(C_2O_4)_2$ (commonly referred to as LiBOB)), lithium difluoro(oxalato)borate ($LiF_2BC_2O_4$), difluoro(trifluoro-2-oxido-2-trifluoro-methylpropionato(2-)-0,0) lithium borate ($LiBF_2(OCOOC(CF_3)_2)$ (commonly referred to as $LiBF_2(HHIB)$)), and lithium difluorophosphate ($LiPO_2F_2$). These electrolyte salts may be used either alone or in combination of two or more thereof. In particular, $LiPF_6$, $LiBF_4$, lithium bisoxalatoborate ($LiB(C_2O_4)_2$ (commonly referred to as LiBOB)), lithium difluoro(oxalato)borate ($LiF_2BC_2O_4$), lithium difluoro(trifluoro-2-oxido-2-trifluoro-methylpropionato(2-)-O,O)borate ($LiBF_2(OCOOC(CF_3)_2)$ (commonly referred to as $LiBF_2(HHIB)$)), and lithium difluorophosphate ($LiPO_2F_2$) are preferred.

The concentration of the electrolyte salt is preferably in the range of 0.5 M or more and 3 M or less. Thereby, the performance when a high load current flows can be improved.

The nonaqueous solvent is not particularly limited. Examples thereof include propylene carbonate (PC), ethylene carbonate (EC), 1,2-dimethoxyethane (DME), $\gamma$-butyrolactone (GBL), tetrahydrofuran (THF), 2-methyltetrahydrofuran (2-MeHF), 1,3-dioxolane, sulfolane, acetonitrile (AN), diethyl carbonate (DEC), dimethyl carbonate (DMC), methyl ethyl carbonate (MEC), and dipropyl carbonate (DPC). These solvents may be used either alone or in combination of two or more thereof. When two or more kinds of solvents are used in combination, it is preferable that all of these solvents have a dielectric constant of 20 or more.

The nonaqueous electrolyte may include other components. Other components are not particularly limited. Examples thereof include vinylene carbonate (VC), fluorovinylene carbonate, methylvinylene carbonate, fluoromethylvinylene carbonate, ethylvinylene carbonate, propylvinylene carbonate, butylvinylene carbonate, dimethylvinylene carbonate, diethylvinylene carbonate, dipropylvinylene carbonate, vinylene acetate (VA), vinylene butyrate, vinylene hexanate, vinylene crotonate, catechol carbonate, propane sultone, and butane sultone. One or more of these components may be included.

4) Separator

A porous film or a nonwoven fabric can be used as the separator. The porous film or the nonwoven fabric may be made either of one type of material or a combination of two or more types of materials. The material forming the porous film or the nonwoven fabric is not particularly limited. Examples thereof include at least one polymer selected from the group consisting of polyolefin, cellulose, polyester, polyvinyl alcohol, polyamide, polyimide, polytetrafluoroethylene, and vinylon. The porous film or the nonwoven fabric may include inorganic particles.

A nonwoven fabric in which cellulose fiber and polyester fiber are mixed is more preferably used as the separator. The nonwoven fabric preferably includes two types of fibers having different average fiber diameters. In such a separator, the pore size can be easily adjusted.

The logarithmic differential pore volume distribution curve of the separator can be obtained by the mercury intrusion method. The logarithmic differential pore volume distribution curve is a graph in which the horizontal axis represents the pore diameter and the vertical axis represents the logarithmic differential pore volume. The logarithmic differential pore volume distribution curve of the separator obtained by the mercury intrusion method has a first peak P1 and a second peak P2.

The first peak P1 appears when the pore diameter is in the range of 0.02 μm or more and 0.15 μm or less. The pore diameter at which the first peak P1 appears, that is, a first mode diameter, can be said to have the highest abundance ratio in the range of 0.02 μm or more and 0.15 μm or less. In the logarithmic differential pore volume distribution curve of the separator, only a single peak or a plurality of peaks may appear when the pore diameter is in the range of 0.02 μm or more and 0.15 μm or less. The first mode diameter is more preferably in the range of 0.02 μm or more and 0.06 μm or less.

The second peak P2 appears when the pore diameter is in the range of 1.5 μm or more and 30 μm or less. The pore diameter at which the second peak P2 appears, that is, a second mode diameter, can be said to have the highest abundance ratio in the range of 1.5 μm or more and 30 μm or less. In the logarithmic differential pore volume distribution curve of the separator, only a single peak or a plurality of peaks may appear when the pore diameter is in the range of 1.5 μm or more and 30 μm or less. The second mode diameter is preferably in the range of 1.5 μm or more and 10 μm or less, and more preferably in the range of 1.5 μm or more and 5 μm or less.

An intensity $P1_I$ of the first peak P1 is preferably 0.7 mL/g or more and 1.2 mL/g or less, and more preferably 0.8 mL/g or more and 1.0 mL/g or less.

An intensity $P2_I$ of the second peak P2 is preferably 0.8 mL/g or more and 3.0 mL/g or less, and more preferably 0.9 mL/g or more and 2.5 mL/g or less.

A ratio $P2_I/P1_I$ of the intensity $P2_I$ of the second peak to the intensity $P1_I$ of the first peak is more than 1.00 and not more than 3.00.

The pore specific surface area of the separator measured by the mercury intrusion method is 70 $m^2$/g or more. The pore specific surface area of the separator is more preferably 80 $m^2$/g or more. When the pore specific surface area of the separator is high, it can be said that the pore surface shape has many irregularities. When the pore specific surface area of the separator is high, the wettability and retention property of the separator with respect to an electrolytic solution tend to be high. Therefore, when a separator having a high pore specific surface area is used, the internal resistance of the battery tends to decrease. The upper limit of the pore specific surface area is not particularly defined; however, the pore specific surface area is, for example, 90 $m^2$/g or less.

A proportion (V1/V×100%) of a cumulative pore volume V1 of pores having a pore diameter of 0.003 μm or more and 1 μm or less in a total pore volume V of the separator measured by the mercury intrusion method is preferably 40% or more and 70% or less. Here, the total pore volume V means a cumulative pore volume of pores having a pore diameter in the range of 0.003 μm to 60 μm. It can be said that the separator having said proportion within this range includes pores having a pore diameter of 1 μm or less and pores having a pore diameter of more than 1 μm in a wellbalanced manner. The use of such a separator tends to reduce the internal resistance of the battery. Said proportion (V1/V×100%) is more preferably 40% or more and 60% or less.

A method of measuring the pore distribution curve by the mercury intrusion method is described below.

Shimadzu Autopore 9520 (Autopore 9520 model manufactured by Shimadzu Corporation) or an apparatus having a function equivalent thereto is used as a measuring apparatus. A sample is obtained by cutting an electrode to a size of about 25 mm × 25 mm, folding it and placing it in a measurement cell, whereupon the measurement is performed at an initial pressure of 20 kPa (the initial pressure of 20 kPa corresponding to about 3 psia and a pressure applied to a sample with a pore diameter of about 60 μm) and a maximum pressure of 414 Mpa (the maximum pressure of 414 Mpa corresponding to about 59986 psia and a pressure applied to a sample with a pore diameter of about 0.003 μm). An average value of three samples is used as a measurement result. For data reduction, the pore specific surface area is calculated assuming that the shape of the pore is cylindrical.

The analysis principle of the mercury intrusion method is based on Washburn's equation (A).

$$D = -4 \; \gamma\cos\theta/P \qquad (A)$$

In the equation, P is an applied pressure, D is a pore diameter, $\gamma$ is a surface tension of mercury (480 dyne·cm$^{-1}$), and $\theta$ is a contact angle between mercury and a pore wall surface, which is 140°. Since $\gamma$ and $\theta$ are constants, the relationship between the applied pressure P and the pore diameter D can be obtained from the Washburn's equation; and the pore diameter and the volume distribution thereof can be derived by measuring the mercury intrusion volume when the pressure is applied. For details of the measurement method, principle, and the like, refer to, for example, Non-Patent Literatures 1 and 2.

A sample is obtained, for example, by the following method. First, the state of charge (SOC) of the battery is set to 0%. Then, the battery is disassembled to remove the separator. Next, the separator is immersed in a carbonate-based solvent, such as ethyl methyl carbonate, for one minute or more to remove an electrolyte salt such as a lithium salt. Thereafter, the washed separator is vacuum-dried for ten minutes or more. The dried separator is used as a sample.

The thickness of the separator is preferably 6 $\mu$m or more and 12 $\mu$m or less, and more preferably 7 $\mu$m or more and 10 $\mu$m or less. The battery according to the first embodiment includes the separator and the negative electrode material layer that includes a titanium-containing oxide described above. Therefore, in the battery according to the first embodiment, even when the positive electrode and the negative electrode are partially in contact with each other, an internal short circuit is less likely to occur. Accordingly, the separator included in the battery according to the first embodiment can be thinner than the conventional separator. By using such a thin separator, the volume energy density of the battery can be increased and the internal resistance can be reduced.

The separator included in the battery according to the first embodiment can be obtained, for example, by the following method. First, a polymeric material as a main ingredient of the separator is dissolved or dispersed in a solvent to obtain a mixed solution. Then, a pore-opening agent is added to the mixed solution to obtain a slurry. The pore-opening agent controls the voids in the separator. That is, the pore distribution of the separator can be controlled by adjusting the mass of the pore-opening agent relative to the mass of the polymeric material in the slurry. Examples of the pore-opening agent include glycol ethers and inorganic fillers. Next, the slurry is applied to form a coating film. Thereafter, the pore-opening agent is removed from the coating film by a drying treatment or an extraction treatment. In this manner, the separator can be obtained.

The separator included in the battery according to the first embodiment is configured so that the ratio $P2_I/P1_I$ of the intensity $P2_I$ of the second peak to the intensity $P1_I$ of the first peak is more than 1.00 and not more than 3.00, and the pore specific surface area is 70 $m^2/g$ or more. Such a separator can be said to include both pores having a relatively small pore diameter and pores having a relatively large pore diameter with an appropriate balance. Such a separator can simultaneously achieve ease of impregnation with an electrolytic solution, reduced likelihood of an internal short circuit, and diffusivity of lithium ions. Therefore, when such a separator is used, a battery having low internal resistance and suppressed self-discharge can be realized.

5) Container Member

A laminate film having a thickness of 0.5 mm or less or a metal container having a thickness of 3 mm or less is used as the container member. More preferably, the metal container has a thickness of 0.5 mm or less. A resin container may also be used. Examples of the material forming the resin container include polyolefin, polyvinyl chloride, polystyrene-based resin, acrylic resin, phenol resin, polyphenylene-based resin, and fluorine-based resin.

Examples of the shape of the container member, that is, the shape of the battery include a flat shape (thin shape), a square shape, a cylindrical shape, a coin shape, and a button shape. For example, the battery can be applied to both a small-sized battery mounted on a portable electronic device or the like, and a large-sized battery mounted on a two-wheel or four-wheel vehicle or the like.

A multilayer film in which a metal layer is interposed between resin layers is used as the laminate film. The metal layer is preferably an aluminum foil or an aluminum alloy foil to reduce a weight thereof. For example, a polymeric material such as polypropylene (PP), polyethylene (PE), nylon, or polyethylene terephthalate (PET) can be used as the resin layer. The laminate film can be sealed by thermal fusion bonding to be formed into the shape of the container member.

The metal container is made of aluminum, an aluminum alloy, or the like. The aluminum alloy preferably includes at least one element selected from the group consisting of magnesium, zinc, and silicon. When transition metals such as iron, copper, nickel, and chromium are included in the alloy, the amount thereof is preferably 100 ppm or less.

6) Negative Electrode Terminal

The negative electrode terminal can be made of aluminum or an aluminum alloy containing at least one element selected from the group consisting of Mg, Ti, Zn, Mn, Fe, Cu, and Si. In order to reduce the contact resistance with the negative electrode current collector, the negative electrode terminal is preferably made of the same material as the negative electrode current collector.

7) Positive Electrode Terminal

The positive electrode terminal is preferably made of aluminum or an aluminum alloy containing at least one element selected from the group consisting of Mg, Ti, Zn, Ni, Cr, Mn, Fe, Cu, and Si. In order to reduce the contact resistance with the positive electrode current collector, the positive electrode terminal is preferably made of the same material as the positive electrode current collector.

Next, the nonaqueous electrolyte battery according to the first embodiment will be described with reference to the drawings.

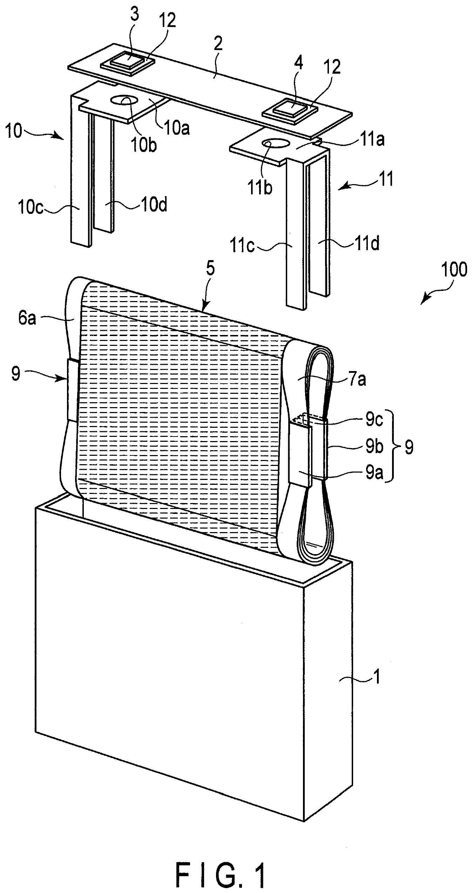

FIG. 1 is an exploded perspective view of an example of the nonaqueous electrolyte battery according to the first embodiment. The battery shown in FIG. 1 is a sealed prismatic nonaqueous electrolyte battery. A nonaqueous electrolyte battery 100 includes a container can 1, a lid 2, a positive electrode external terminal 3, a negative electrode external terminal 4, and an electrode group 5. The container can 1 and the lid 2 constitute a container member.

The container can 1 has a bottomed rectangular tube shape and is formed of a metal such as aluminum, an aluminum alloy, iron, or stainless steel.

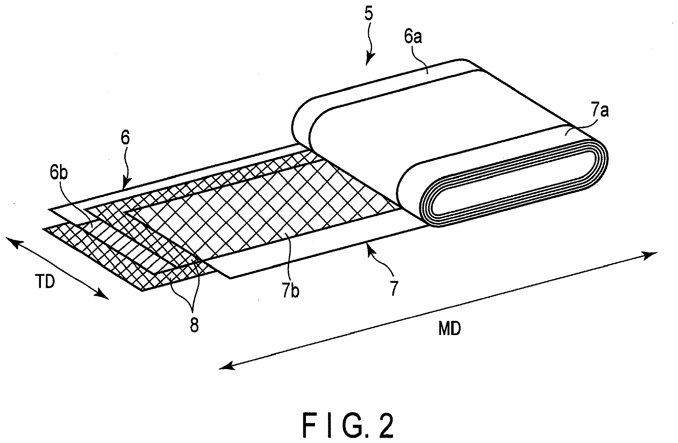

FIG. 2 is a partially unfolded perspective view of the electrode group included in the nonaqueous electrolyte battery shown in FIG. 1. As shown in FIG. 2, the flat electrode group 5 is formed by winding a positive electrode 6 and a negative electrode 7 into a flat shape with a separator 8 interposed therebetween. The positive electrode 6 includes, for example, a belt-shaped positive electrode current collector made of a metal foil; a positive electrode current collecting tab 6a, made of one end portion parallel to a long side of the positive electrode current collector; and a positive electrode material layer (positive electrode active material-containing layer) 6b formed on the positive electrode current collector, excluding at least the portion where the positive electrode current collecting tab 6a is formed. On the other hand, the negative electrode 7 includes a belt-shaped negative electrode current collector made of, for example, a metal foil; a negative electrode current collecting tab 7a, made of one end portion parallel to a long side of the negative electrode current collector; and a negative electrode material layer (negative electrode active material-containing layer) 7b formed on the negative electrode current collector, excluding at least the portion where the negative electrode current collecting tab 7a is formed. In FIG. 2, a machine direction of the separator is indicated as MD, and a direction perpendicular to the machine direction is indicated as TD (transverse direction).

The positive electrode 6, the separator 8, and the negative electrode 7 described above are wound with the positions of the positive electrode 6 and the negative electrode 7 shifted with respect to each other, so that the positive electrode current collecting tab 6a protrudes from the separator 8 in the winding axis direction of the electrode group, and the negative electrode current collecting tab 7a protrudes from the separator 8 in the opposite direction. As a result of such winding, the electrode group 5 is formed so that the spirally-wound positive electrode current collecting tab 6a protrudes from one end face, and the spirally-wound negative electrode current collecting tab 7a protrudes from the other end face, as shown in FIG. 2. The electrode group 5 is impregnated with an electrolytic solution (not shown).

As shown in FIG. 1, each of the positive electrode current collecting tab 6a and the negative electrode current collecting tab 7a is divided into two bundles, with the vicinity of the center of the winding of the electrode group as a boundary. A conductive holding member 9 includes first and second holding portions 9a and 9b having an approximately U-shape, and a connecting portion 9c for electrically connecting the first holding portion 9a and the second holding portion 9b. One of the bundles of each of the positive electrode current collecting tab 6a and the negative electrode current collecting tab 7a is held by the first holding portion 9a, and the other bundle thereof is held by the second holding portion 9b.

A positive electrode lead 10 includes an approximately rectangular support plate 10a, a through hole 10b in the support plate 10a, and strip-shaped current collecting portions 10c and 10d branched from the support plate 10a and extending downward. On the other hand, a negative electrode lead 11 includes an approximately rectangular support plate 11a, a through hole 11b in the support plate 11a, and strip-shaped current collecting portions 11c and 11d branched from the support plate 11a and extending downward.

The positive electrode lead 10 holds the holding member 9 between the current collecting portions 10c and 10d. The current collecting portion 10c is arranged on the first holding portion 9a of the holding member 9. The current collecting portion 10d is arranged on the second holding portion 9b. The current collecting portions 10c and 10d, the first and second holding portions 9a and 9b, and the positive electrode current collecting tab 6a are joined by, for example, ultrasonic welding. Thus, the positive electrode 6 of the electrode group 5 and the positive electrode lead 10 are electrically connected to each other via the positive electrode current collecting tab 6a.

The negative electrode lead 11 holds the holding member 9 between the current collecting portions 11c and 11d. The current collecting portion 11c is arranged on the first holding portion 9a of the holding member 9. On the other hand, the current collecting portion 11d is arranged on the second holding portion 9b. The current collecting portions 11c and 11d, the first and second holding portions 9a and 9b, and the negative electrode current collecting tab 7a are joined by, for example, ultrasonic welding. Thus, the negative electrode 7 of the electrode group 5 and the negative electrode lead 11 are electrically connected to each other via the negative electrode current collecting tab 7a.

The materials of the positive and negative electrode leads 10 and 11 and the holding member 9 are not particularly specified, but are preferably the same as those of the positive and negative electrode external terminals 3 and 4. For example, aluminum or an aluminum alloy is used for the positive electrode external terminal 3, and aluminum, an aluminum alloy, copper, nickel, nickel-plated iron, or the like is used for the negative electrode external terminal 4. For example, when the material of the external terminal is aluminum or an aluminum alloy, the material of the lead is preferably aluminum or an aluminum alloy. When the external terminal is made of copper, the material of the lead is preferably copper or the like.

The rectangular plate-shaped lid 2 is seam-welded to an opening of the container can 1 by, for example, a laser. The lid 2 is made of a metal such as aluminum, an aluminum alloy, iron, or stainless steel. The lid 2 and the container can 1 are preferably made of the same type of metal. The positive electrode external terminal 3 is electrically connected to the support plate 10a of the positive electrode lead 10, and the negative electrode external terminal 4 is electrically connected to the support plate 11a of the negative electrode lead 11. An insulating gasket 12 is disposed between the lid 2 and the positive and negative electrode external terminals 3 and 4 to electrically insulate the positive and negative electrode external terminals 3 and 4 from the lid 2. The insulating gasket 12 is preferably a resin molded product.

According to the first embodiment described above, a nonaqueous electrolyte battery is provided. The nonaqueous electrolyte battery includes a positive electrode, a negative electrode, a separator, and a nonaqueous electrolyte. The negative electrode includes a negative electrode material layer. The negative electrode material layer includes a titanium-containing oxide as a negative electrode active material. The separator is positioned at least between the positive electrode and the negative electrode. The logarithmic differential pore volume distribution curve of the separator by the mercury intrusion method includes a first peak and a second peak. The first peak is a local maximum value where the pore diameter is in the range of 0.02 $\mu$m or more and 0.15 $\mu$m or less. The second peak is a local maximum value where the pore diameter is in the range of 1.5 $\mu$m or more and 30 $\mu$m or less. A ratio $P2_I/P1_I$ of the intensity $P2_I$ of the second peak to the intensity $P1_I$ of the first peak is more than 1.00 and not more than 3.00. The pore specific surface area of the separator by the mercury intrusion method is 70 $m^2/g$ or more.

With such a configuration, the battery according to the first embodiment can achieve both low internal resistance and suppression of self-discharge.

(Second Embodiment)

According to a second embodiment, a battery pack including a nonaqueous electrolyte battery is provided. The nonaqueous electrolyte battery according to the first embodiment is used as the nonaqueous electrolyte battery. The number of nonaqueous electrolyte batteries (unit cells) included in the battery pack may be one or more.

A plurality of nonaqueous electrolyte batteries can be electrically connected in series, in parallel, or in a combination of in-series and in-parallel to form a battery module. The battery pack may include a plurality of battery modules.

The battery pack may further include a protective circuit. The protective circuit has a function of controlling charge and discharge of the nonaqueous electrolyte battery. A circuit included in devices (such as electronic devices and automobiles) that use a battery pack as a power source may be used as the protective circuit of the battery pack.

The battery pack may further include an external power distribution terminal. The external power distribution terminal is for outputting a current from the nonaqueous electrolyte battery to the outside and for inputting a current to the nonaqueous electrolyte battery. In other words, when the battery pack is used as a power source, a current is supplied to the outside through the external power distribution terminal. When the battery pack is charged, a charging current (including regenerative energy of automobile power) is supplied to the battery pack through the external power distribution terminal.

Next, an example of the battery pack according to the second embodiment will be described with reference to the drawings.

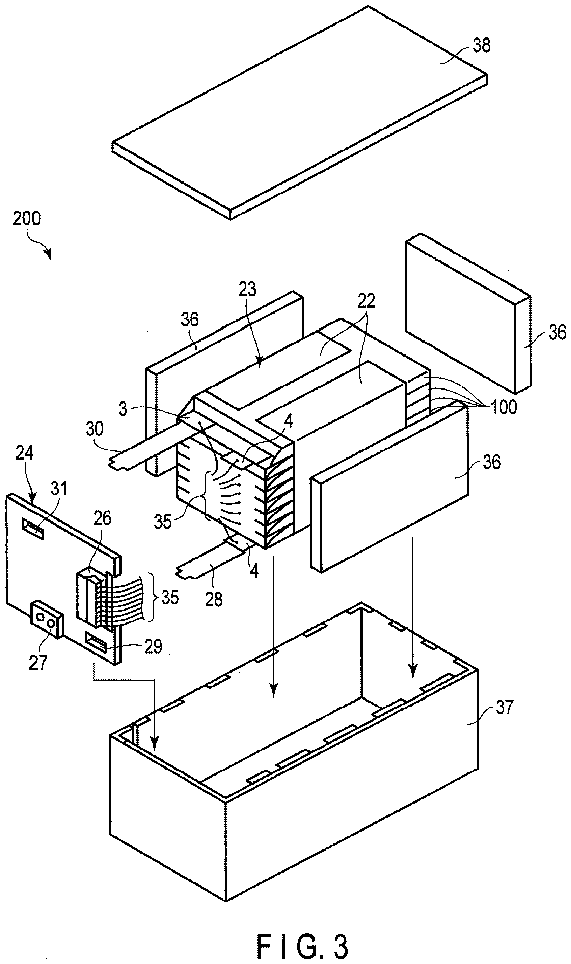

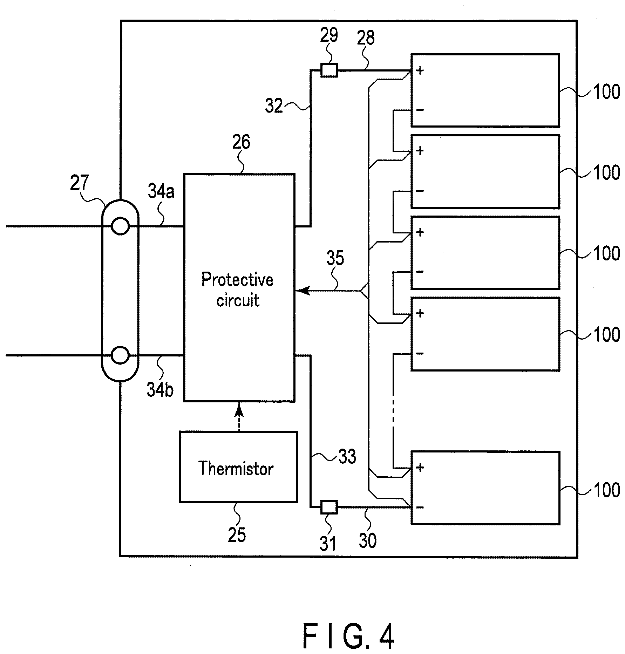

FIG. 3 is an exploded perspective view of an exemplary battery pack of the second embodiment. FIG. 4 is a block diagram showing an electric circuit of the battery pack shown in FIG. 3.

A battery pack 200 shown in FIGS. 3 and 4 includes a plurality of flat batteries 100 having the structure shown in FIGS. 1 and 2.

The plurality of unit cells 100 are stacked so that the negative electrode external terminal 4 and the positive electrode external terminal 3 extending to the outside are aligned in the same direction, and fastened with an adhesive tape 22 to form a battery module 23. These unit cells 100 are electrically connected to each other in series, as shown in FIG. 4.

A printed wiring board 24 is disposed so as to face the side surface from which the negative electrode external terminal 4 and the positive electrode external terminal 3 of the unit cells 100 extend. As shown in FIG. 4, the printed wiring board 24 is provided with a thermistor 25, a protective circuit 26, and a terminal 27 for energizing an external device. An insulating plate (not shown) is attached to the surface of the printed wiring board 24 facing the battery module 23 in order to avoid unnecessary connection with the wire of the battery module 23.

A positive electrode-side lead 28 is connected to the positive electrode external terminal 3 of the unit cell 100 positioned at the lowermost layer of the battery module 23, and the tip end thereof is inserted into a positive electrode-side connector 29 of the printed wiring board 24 and electrically connected thereto. A negative electrode-side lead 30 is connected to the negative electrode external terminal 4 of the unit cell 100 positioned at the uppermost layer of the battery module 23, and the tip end thereof is inserted into a negative electrode-side connector 31 of the printed wiring board 24 and electrically connected thereto. These connectors 29 and 31 are connected to the protective circuit 26 through wires 32 and 33 formed on the printed wiring board 24, respectively.

The thermistor 25 detects the temperature of each of the unit cells 100 and transmits the detection signal to the protective circuit 26. The protective circuit 26 can cut off a plus-side wire 34a and a minus-side wire 34b between the protective circuit 26 and the terminal 27 for energizing an external device under a predetermined condition. An example of such a predetermined condition is when a signal indicating that the temperature of the unit cell 100 is equal to or higher than a predetermined temperature is received from, for example, the thermistor 25. Another example of the predetermined condition is when over-charge, over-discharge, overcurrent, or the like of the unit cell 100 is detected. The detection of the over-charge or the like is performed for the individual unit cells 100 or the unit cells 100 as a whole. In the case of detecting the individual unit cells 100, a battery voltage may be detected, or a positive electrode potential or a negative electrode potential may be detected. In the latter case, a lithium electrode used as a reference electrode is inserted into each unit cell 100. In the battery pack 200 of FIGS. 3 and 4, a wire 35 for voltage detection is connected to each of the unit cells 100, and a detection signal is transmitted to the protective circuit 26 through the wire 35.

Protective sheets 36 made of rubber or resin are arranged on three side surfaces of the battery module 23, except for the side surface from which the positive electrode external terminal 3 and the negative electrode external terminal 4 protrude.

The battery module 23 is stored in a storage container 37 together with each protective sheet 36 and the printed wiring board 24. That is, the protective sheets 36 are disposed on both of the inner side surfaces in the longside direction and an inner side surface in the short-side direction of the storage container 37, and the printed wiring board 24 is disposed on the opposite inner side surface in the short-side direction. The battery module 23 is positioned in a space surrounded by the protective sheets 36 and the printed wiring board 24. A lid 38 is attached to an upper surface of the storage container 37.

A heat-shrinkable tape may be used to fix the battery module 23 instead of the adhesive tape 22. In this case, the battery module has protective sheets arranged on both of its side surfaces, is wrapped with the heat-shrinkable tube, and then bound by thermally contracting the heat-shrinkable tube.

The battery pack 200 shown in FIGS. 3 and 4 has a configuration in which the unit cells 100 are connected in series; however, the battery pack according to the second embodiment may be configured so that the unit cells 100 are connected in parallel to increase the battery capacity. Alternatively, the battery pack according to the second embodiment may include a plurality of unit cells 100 connected in a combination of in-series and in-parallel. Further, the battery packs 200 assembled may be connected in series or in parallel.

The battery pack 200 shown in FIGS. 3 and 4 includes a plurality of unit cells 100; however, the battery pack according to the second embodiment may include one unit cell 100.

The configuration of the battery pack 200 is altered appropriately depending on the application. The battery pack 200 is preferably used in applications where cycle characteristics with large current characteristics are desired. Specific applications are power supplies for digital cameras, and on-vehicle applications such as two-or four-wheel hybrid electric vehicles, two- or four-wheel electric vehicles, and assisted bicycles. The battery pack 200 is particularly suitable for use in the on-vehicle applications.

In automobiles equipped with the battery pack according to the present embodiment, the battery pack recovers, for example, the regenerative energy of automobile power.

The battery pack of the second embodiment detailed above includes the nonaqueous electrolyte battery of the first embodiment. Therefore, the battery pack according to the second embodiment can achieve both low internal resistance and suppression of self-discharge.

EXAMPLES

Examples will be described below; however, the inventions are not limited to these examples as long as the gist of the inventions is not exceeded.

(Example 1)

<Production of Positive Electrode>

A nickel-containing lithium-manganese-cobalt composite oxide ($LiNi_{0.5}Co_{0.2}Mn_{0.3}O_2$) was provided as a positive electrode active material. Graphite and acetylene black were provided as conductive agents. Then, polyvinylidene fluoride (PVdF) was provided as a binder. Next, the positive electrode active material, graphite, acetylene black, and PVdF were mixed to obtain a mixture. At this time, graphite was added in a proportion of 2.5% by mass with respect to a positive electrode material layer to be produced. Acetylene black was added in a proportion of 2.5% by mass with respect to the positive electrode material layer to be produced. PVdF was added in an amount of 5% by mass with respect to the positive electrode material layer to be produced. Next, the obtained mixture was dispersed in an n-methylpyrrolidone (NMP) solvent to prepare a slurry. The obtained slurry was applied to an aluminum foil having a thickness of 15 $\mu$m so that the coating amount per unit area was 80 g/m$^2$, and dried. Next, the dried coating film was pressed. In this manner, a positive electrode with the positive electrode material layer having a weight per unit area of 80 g/m$^2$ and a density of

3 g/cm$^3$ was produced.

<Production of Negative Electrode>

A spinel-type lithium-titanium composite oxide (Li$_4$Ti$_5$O$_{12}$) was provided as a negative electrode active material. Graphite was provided as a conductive agent. Then, PVdF was provided as a binder. Next, the negative electrode active material, graphite, and PVdF were mixed to obtain a mixture. At this time, graphite was added in an amount of 3% by mass with respect to a negative electrode material layer to be produced. PVdF was added in an amount of 2% by mass with respect to the negative electrode material layer to be produced. Next, the obtained mixture was mixed in an N-methylpyrrolidone (NMP) solution to prepare a slurry. The obtained slurry was applied to a current collector made of an aluminum foil having a thickness of 15 μm so that the coating amount per unit area was 120 g/m$^2$, and dried. Next, the dried coating film was pressed to form the negative electrode material layer on the current collector. In this manner, a belt-shaped negative electrode with the negative electrode material layer having a weight per unit area of 120 g/m$^2$ and a density of 2.1 g/cm$^3$ was produced.

<Preparation of Nonaqueous Electrolyte>

LiPF$_6$ in an amount of 1 M was mixed and dissolved in a nonaqueous solvent made of 33% by volume of ethylene carbonate (EC) and 67% by volume of diethyl carbonate (DEC), to prepare a nonaqueous electrolytic solution as a nonaqueous electrolyte.

<Production of Separator>

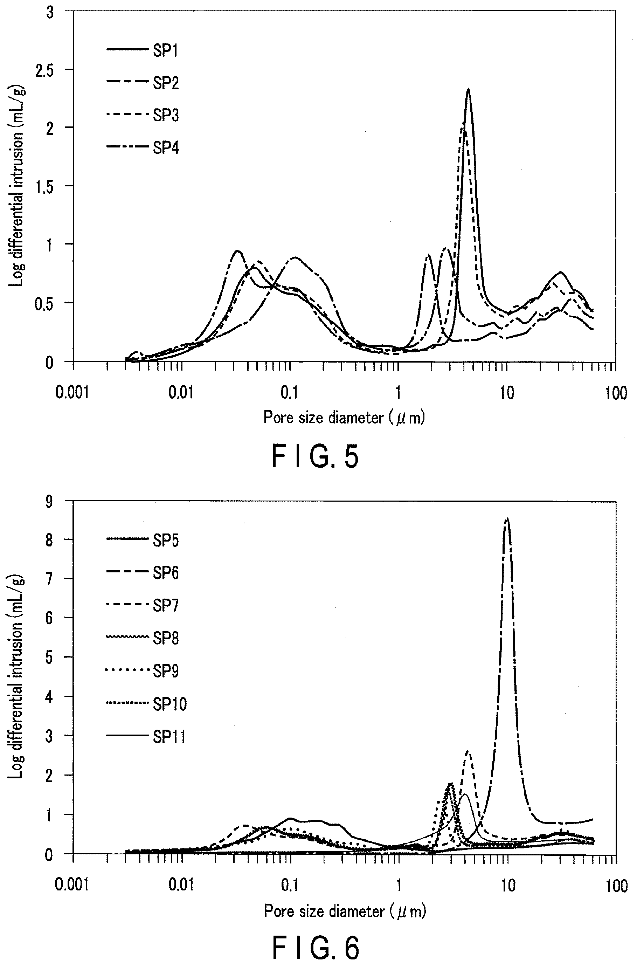

A separator made of a nonwoven fabric including cellulose and polyester was prepared as a separator SP1. The thickness, the ratio P2$_I$/P1$_I$, the first mode diameter, the second mode diameter, the pore specific surface area, and the pore volume proportion (V1/V×100) of the separator SP1 were as shown in Table 1. FIG. 5 shows the pore distribution of the separator SP1 by the mercury intrusion method.

<Assembly of Battery>

First, the separator SP1 was impregnated with the nonaqueous electrolyte prepared above. Next, the positive electrode produced above was covered with the separator SP1, and the negative electrode produced above was then superimposed in a manner to face the positive electrode with the separator SP1 interposed therebetween, to obtain a stack. The stack was wound spirally to produce a spiral electrode group. The electrode group was pressed into a flat shape.

The flat electrode group was inserted into a bottomed rectangular tubular can made of aluminum having a thickness of 0.3 mm, and the can was sealed with a lid. In this manner, a flat nonaqueous electrolyte secondary battery having a thickness of 5 mm, a width of 30 mm, a height of 25 mm, and a mass of 100 g was produced.

(Example 2)

A separator made of a nonwoven fabric including cellulose and polyester was prepared as a separator SP2. The thickness, the ratio P2$_I$/P1$_I$, the first mode diameter, the second mode diameter, the pore specific surface area, and the pore volume proportion (V1/V×100) of the separator SP2 were as shown in Table 1. FIG. 5 shows the pore distribution of the separator SP2 by the mercury intrusion method.

A battery was produced in the same manner as in Example 1, except that the separator SP2 was used instead of the separator SP1.

(Example 3)

A separator made of a nonwoven fabric including cellulose and polyester was prepared as a separator SP3. The thickness, the ratio P2$_I$/P1$_I$, the first mode diameter, the second mode diameter, the pore specific surface area, and the pore volume proportion (V1/V×100) of the separator SP3 were as shown in Table 1. FIG. 5 shows the pore distribution of the separator SP3 by the mercury intrusion method.

A battery was produced in the same manner as in Example 1, except that the separator SP3 was used instead of the separator SP1.

(Example 4)

A separator made of a nonwoven fabric including cellulose and polyester was prepared as a separator SP4. The thickness, the ratio $P2_I/P1_I$, the first mode diameter, the second mode diameter, the pore specific surface area, and the pore volume proportion (V1/V×100) of the separator SP4 were as shown in Table 1. FIG. 5 shows the pore distribution of the separator SP4 by the mercury intrusion method.
A battery was produced in the same manner as in Example 1, except that the separator SP4 was used instead of the separator SP1.

(Example 5)

A battery was produced in the same manner as in Example 1, except that a lithium-manganese composite oxide ($LiMn_2O_4$) was used as a positive electrode active material instead of a lithium-manganese-cobalt composite oxide, and a sodium-niobium-titanium composite oxide ($Li_2Na_{1.8}Ti_{5.8}Nb_{0.2}O_{14}$) was used instead of a lithium-titanium composite oxide.

(Comparative Example 1)

A separator made of a nonwoven fabric including polyolefin was prepared as a separator SP5. The thickness, the ratio $P2_I/P1_I$, the first mode diameter, the second mode diameter, the pore specific surface area, and the pore volume proportion (V1/V×100) of the separator SP5 were as shown in Table 1. FIG. 6 shows the pore distribution of the separator SP5 by the mercury intrusion method.
A battery was produced in the same manner as in Example 1, except that the separator SP5 was used instead of the separator SP1.

(Comparative Example 2)

A separator made of a nonwoven fabric including polyolefin was prepared as a separator SP6. The thickness, the ratio $P2_I/P1_I$, the first mode diameter, the second mode diameter, the pore specific surface area, and the pore volume proportion (V1/V×100) of the separator SP6 were as shown in Table 1. FIG. 6 shows the pore distribution of the separator SP6 by the mercury intrusion method.
A battery was produced in the same manner as in Example 1, except that the separator SP6 was used instead of the separator SP1.

(Comparative Example 3)

A separator made of a nonwoven fabric including cellulose and polyester was prepared as a separator SP7. The thickness, the ratio $P2_I/P1_I$, the first mode diameter, the second mode diameter, the pore specific surface area, and the pore volume proportion (V1/V×100) of the separator SP7 were as shown in Table 1. FIG. 6 shows the pore distribution of the separator SP7 by the mercury intrusion method.
A battery was produced in the same manner as in Example 1, except that the separator SP7 was used instead of the separator SP1.

(Comparative Example 4)

A separator made of a nonwoven fabric including cellulose and polyester was prepared as a separator SP8. The thickness, the ratio $P2_I/P1_I$, the first mode diameter, the second mode diameter, the pore specific surface area, and the pore volume proportion (V1/V×100) of the separator SP8 were as shown in Table 1. FIG. 6 shows the pore distribution of the separator SP8 by the mercury intrusion method.
A battery was produced in the same manner as in Example 1, except that the separator SP8 was used instead of the separator SP1.

(Comparative Example 5)

A separator made of a nonwoven fabric including cellulose and polyester was prepared as a separator SP9. The thickness, the ratio $P2_I/P1_I$, the first mode diameter, the second mode diameter, the pore specific surface area, and the pore volume proportion (V1/V×100) of the separator SP9 were as shown in Table 1. FIG. 6 shows the pore distribution of the separator SP9 by the mercury intrusion method.

A battery was produced in the same manner as in Example 1, except that the separator SP9 was used instead of the separator SP1.

(Comparative Example 6)

A separator made of a nonwoven fabric including cellulose and polyester was prepared as a separator SP10. The thickness, the ratio $P2_I/P1_I$, the first mode diameter, the second mode diameter, the pore specific surface area, and the pore volume proportion ($V1/V \times 100$) of the separator SP10 were as shown in Table 1. FIG. 6 shows the pore distribution of the separator SP10 by the mercury intrusion method.

A battery was produced in the same manner as in Example 1, except that the separator SP10 was used instead of the separator SP1.

(Comparative Example 7)

A separator made of a nonwoven fabric including cellulose and polyester was prepared as a separator SP11. The thickness, the ratio $P2_I/P1_I$, the first mode diameter, the second mode diameter, the pore specific surface area, and the pore volume proportion ($V1/V \times 100$) of the separator SP11 were as shown in Table 1. FIG. 6 shows the pore distribution of the separator SP11 by the mercury intrusion method.

A battery was produced in the same manner as in Example 1, except that the separator SP11 was used instead of the separator SP1.

(Comparative Example 8)

A battery was produced in the same manner as in Example 5, except that the separator SP5 was used instead of the separator SP1.

[Characteristics Evaluation]

<Resistance Measurement>

The battery resistance of the obtained batteries was measured by the following method. First, the batteries were charged at a current of 1C in an environment of 25°C until the state-of-charge (SOC) reached 50%. The battery voltage at this time was measured and defined as voltage A. The batteries charged until the SOC reached 50% were then discharged at a current of 10C for 0.2 seconds. The battery voltage after discharge was measured and defined as voltage B. Next, the battery resistance was calculated from the difference between the voltage A after charging and the voltage B after discharging. The results are shown in Table 1.

<Self-discharge Capacity Measurement>

The self-discharge capacity of the obtained batteries was measured by the following method. First, the batteries having the SOC of 100% were discharged at a current of 1C until the SOC became 0%. The discharge capacity obtained at this time was defined as discharge capacity L. The batteries having the SOC of 0% were then charged at a current of 1C until the SOC reached 100%. The batteries having the SOC of 100% were then stored at a temperature of 0°C for 7 days. The stored batteries were then discharged at a current of 1C until the SOC became 0%. The discharge capacity obtained at this time was defined as discharge capacity M. Next, a value obtained by subtracting the discharge capacity M from the discharge capacity L was calculated and defined as a self-discharge capacity. The results of the self-discharge capacity are shown in Table 1.

Table 1 below summarizes the separators and the characteristics of the batteries of the Examples and the Comparative Examples.

**Table 1**

| | Separator | | | | | | | | Positive electrode | Negative electrode | Battery characteristics | |
|---|---|---|---|---|---|---|---|---|---|---|---|---|
| | Type | Material | Thickness ($\mu$m) | Ratio $P2_I/P1_I$ | First mode diameter ($\mu$m) | Second mode diameter ($\mu$m) | Pore specific surface area ($m^2$/g) | Pore volume proportion (%) | Active material | Active material | Resistance ($m\Omega$) | Self-discharge capacity (mAh) |
| Example 1 | SP1 | Cellulose/ Polyester | 10 | 2.92 | 0.05 | 4.5 | 72.2 | 44 | lithium-manganese-cobalt composite oxide | lithium-titanium composite oxide | 8.0 | 10.0 |
| Example 2 | SP2 | Cellulose/ Polyester | 10 | 1.03 | 0.11 | 1.9 | 75.2 | 59 | lithium-manganese-cobalt composite oxide | lithium-titanium composite oxide | 7.9 | 10.4 |
| Example 3 | SP3 | Cellulose/ Polyester | 9 | 2.40 | 0.05 | 4.2 | 74.8 | 44 | lithium-manganese-cobalt composite oxide | lithium-titanium composite oxide | 8.0 | 10.0 |
| Example 4 | SP4 | Cellulose/ Polyester | 10 | 1.03 | 0.03 | 2.8 | 88.2 | 54 | lithium-manganese-cobalt composite oxide | lithium-titanium composite oxide | 8.0 | 8.6 |
| Example 5 | SP1 | Cellulose/ Polyester | 10 | 2.92 | 0.05 | 4.5 | 72.2 | 44 | lithium-manganese composite oxide | sodium-niobium-titanium composite oxide | 7.5 | 12.0 |

| | | Separator | | | | | | | Positive electrode | Negative electrode | Battery characteristics | |
|---|---|---|---|---|---|---|---|---|---|---|---|---|
| | Type | Material | Thickness ($\mu$m) | Ratio $P2_I/P1_I$ | First mode diameter ($\mu$m) | Second mode diameter ($\mu$m) | Pore specific surface area ($m^2$/g) | Pore volume proportion (%) | Active material | Active material | Resistance (m$\Omega$) | Self-discharge capacity (mAh) |
| Comparative Example 1 | SP5 | Polyolefin | 6 | - | 0.10 | - | 64.0 | 75 | lithium-manganese-cobalt composite oxide | lithium-titanium composite oxide | 8.9 | 5.0 |
| Comparative Example 2 | SP6 | Polyolefin | 8 | - | - | 10.5 | 28.1 | 2 | lithium-manganese-cobalt composite oxide | lithium-titanium composite oxide | 8.8 | 90.0 |
| Comparative Example 3 | SP7 | Cellulose/ Polyester | 10 | 3.58 | 0.04 | 4.5 | 65.9 | 39 | lithium-manganese-cobalt composite oxide | lithium-titanium composite oxide | 8.6 | 14.0 |
| Comparative Example 4 | SP8 | Cellulose/ Polyester | 9 | 2.34 | 0.06 | 3.3 | 55.0 | 45 | lithium-manganese-cobalt composite oxide | lithium-titanium composite oxide | 9.0 | 9.8 |
| Comparative Example 5 | SP9 | Cellulose/ Polyester | 10 | 2.20 | 0.10 | 2.4 | 53.7 | 48 | lithium-manganese-cobalt composite oxide | lithium-titanium composite oxide | 9.0 | 9.6 |

EP 3 780 219 B1

(continued)

| | | | | | | | | | Positive electrode | Negative electrode | Battery characteristics | |
|---|---|---|---|---|---|---|---|---|---|---|---|---|
| | | | | | Separator | | | | | | | |
| | Type | Material | Thickness (μm) | Ratio $P2_I/P1_I$ | First mode diameter (μm) | Second mode diameter (μm) | Pore specific surface area (m$^2$/g) | Pore volume proportion (%) | Active material | Active material | Resistance (mΩ) | Self-discharge capacity (mAh) |
| Comparative Example 6 | SP10 | Cellulose/ Polyester | 9 | 2.52 | 0.06 | 2.8 | 55.4 | 50 | lithium-manganese-cobalt composite oxide | lithium-titanium composite oxide | 9.0 | 8.6 |
| Comparative Example 7 | SP11 | Cellulose/ Polyester | 10 | - | - | 4.2 | 11.7 | 12 | lithium-manganese-cobalt composite oxide | lithium-titanium composite oxide | 9.7 | 30.0 |
| Comparative Example 8 | SP5 | Polyolefin | 6 | - | 0.10 | - | 64.0 | 75 | lithium-manganese composite oxide | sodium-niobium-titanium composite oxide | 9.4 | 6.0 |

In Table 1 above, the column labeled "Type" under the heading "Separator" shows the number of the separators used. The column labeled "Material" shows the materials of the fiber included in the nonwoven fabric. The column labeled "Thickness ($\mu$m)" shows the film thickness of the separator. The column labeled "Ratio $P2_I/P1_I$" shows a ratio of the intensity $P2_I$ of the second peak to the intensity $P1_I$ of the first peak. The columns labeled "First mode diameter ($\mu$m)" and "Second mode diameter ($\mu$m)" show the pore diameters at which the first peak P1 and the second peak P2 appeared, respectively. The column labeled "Pore specific surface area ($m^2$/g)" shows the pore specific surface area of the separator. The column labeled "Pore volume proportion (%)" shows a proportion ($V1/V\times100\%$) of the cumulative pore volume V1 of pores having a pore diameter of 0.003 $\mu$m or more and 1 $\mu$m or less in the total pore volume V.

In Table 1 above, the column labeled "Active material" under the heading "Positive electrode" shows the types of the positive electrode active material. In addition, the column labeled "Active material" under the heading "Negative electrode" shows the types of the negative electrode active material.

In Table 1 above, the column labeled "Resistance (m$\Omega$)" under the heading "Battery characteristics" shows the battery resistance obtained by the above-described method. The column labeled "Self-discharge capacity (mAh)" shows the self-discharge capacity obtained by the above-described method.

FIG. 5 is a graph showing the logarithmic differential pore volume distribution curve of the separators according to the Examples. In FIG. 5, the horizontal axis represents the pore diameter, and the vertical axis represents the logarithmic differential pore volume. FIG. 5 is created based on the data of the separators SP1 to SP4.

FIG. 6 is a graph showing the logarithmic differential pore volume distribution curve of the separators according to the Comparative Examples. In FIG. 6, the horizontal axis represents the pore diameter, and the vertical axis represents the logarithmic differential pore volume. FIG. 6 is created based on the data of the separators SP5 to SP11.

As is apparent from Table 1 and FIGS. 5 and 6, the batteries of Examples 1 to 5, which used the separators SP1 to SP4, were able to achieve both low internal resistance and suppression of self-discharge. In all of the separators SP1 to SP4, the ratio $P2_I/P1_I$ was more than 1.00 and not more than 3.00, and the pore specific surface area was 70 $m^2$/g or more.

On the other hand, the batteries of Comparative Examples 1 and 8, which used the separator SP5, had a low self-discharge capacity but high internal resistance. The separator SP5 had only the first peak and no second peak. It is considered that because such a separator is excessively dense, the diffusion of lithium ions is poor as compared with the separators SP1 to 4.

The batteries of Comparative Examples 2 and 7, which used the separators SP6 and SP11, had a high self-discharge capacity. The separators SP6 and SP11 had only the second peak and no first peak. It is considered that when such separators are used, the positive electrode and the negative electrode are easily brought into contact with each other, resulting in an increase of the self-discharge capacity.

The battery of Comparative Example 3, which used the separator SP7, had high internal resistance and a high self-discharge capacity. The separator SP7 had a ratio $P2_I/P1_I$ of more than 3 and a pore specific surface area of lower than 70 $m^2$/g. It is considered that when such a separator is used, the positive electrode and the negative electrode are easily brought into contact with each other, and the impregnation of the separator with the electrolytic solution is insufficient, resulting in an increase of the internal resistance.

The batteries of Comparative Examples 4 to 6, which used the separators SP8 to SP10, had a low self-discharge capacity but high internal resistance. In all of the separators SP8 to SP10, the ratio $P2_I/P1_I$ was more than 1.00 and not more than 3.00, and the pore specific surface area was lower than 70 $m^2$/g. It is considered that because the impregnation of such separators with the electrolytic solution is insufficient, the internal resistance is increased.

As is apparent from the comparison between Example 1 and Example 5, even when different types of the titanium-containing oxide included in the negative electrode and different types of the positive electrode active material included in the positive electrode were used, it was possible to achieve both low internal resistance and suppression of self-discharge.

According to the embodiments described above, a nonaqueous electrolyte battery is provided. The nonaqueous electrolyte battery includes a positive electrode, a negative electrode, a separator, and a nonaqueous electrolyte. The negative electrode includes a negative electrode material layer. The negative electrode material layer includes a titanium-containing oxide as a negative electrode active material. The separator is positioned at least between the positive electrode and the negative electrode. The logarithmic differential pore volume distribution curve of the separator by the mercury intrusion method includes a first peak P1 and a second peak P2. The first peak P1 is a local maximum value where the pore diameter is in the range of 0.02 $\mu$m or more and 0.15 $\mu$m or less. The second peak P2 is a local maximum value where the pore diameter is in the range of 1.5 $\mu$m or more and 30 $\mu$m or less. The ratio $P2_I/P1_I$ of the intensity $P2_I$ of the second peak to the intensity $P1_I$ of the first peak is more than 1.00 and not more than 3.00. The pore specific surface area of the separator by the mercury intrusion method is 70 $m^2$/g or more.

With such a configuration, the battery according to the first embodiment can achieve both low internal resistance and suppression of self-discharge.

**Claims**

1. A nonaqueous electrolyte battery, comprising:

   a positive electrode;
   a negative electrode comprising a negative electrode material layer comprising a negative electrode active material, the negative electrode comprising a titanium-containing oxide as the negative electrode active material;
   a separator positioned at least between the positive electrode and the negative electrode; and
   a nonaqueous electrolyte,
   wherein a logarithmic differential pore volume distribution curve of the separator by a mercury intrusion method includes a first peak and a second peak, the first peak is a local maximum value where a pore diameter is in a range of 0.02 $\mu$m or more and 0.15 $\mu$m or less, the second peak is a local maximum value where a pore diameter is in a range of 1.5 $\mu$m or more and 30 $\mu$m or less, and a ratio $P2_I/P1_I$ of an intensity $P2_I$ of the second peak to an intensity $P1_I$ of the first peak is more than 1.00 and not more than 3.00, and
   wherein a pore specific surface area of the separator by the mercury intrusion method is 70 m$^2$/g or more.

2. The nonaqueous electrolyte battery according to claim 1, wherein a proportion of a cumulative pore volume of pores having a pore diameter of 1 $\mu$m or less in a total pore volume of the separator by the mercury intrusion method is 40% or more and 70% or less.

3. The nonaqueous electrolyte battery according to claim 1 or 2, wherein the pore specific surface area of the separator by the mercury intrusion method is 70 m$^2$/g or more and 90 m$^2$/g or less.

4. The nonaqueous electrolyte battery according to any one of claims 1 to 3, wherein the separator has a thickness of 6 $\mu$m or more and 12 $\mu$m or less.

5. The nonaqueous electrolyte battery according to any one of claims 1 to 4, wherein the separator is made of a nonwoven fabric comprising cellulose.

6. The nonaqueous electrolyte battery according to any one of claims 1 to 5, wherein the titanium-containing oxide includes a titanium-containing oxide having a crystal structure selected from the group consisting of orthorhombic, spinel-type, anatase-type, rutile-type, bronze-type, monoclinic, and ramsdellite crystal structures.

7. The nonaqueous electrolyte battery according to any one of claims 1 to 6, wherein the titanium-containing oxide comprises at least one element selected from the group consisting of P, V, Sn, Cu, Ni, Nb and Fe.

8. The nonaqueous electrolyte battery according to any one of claims 1 to 7, wherein the negative electrode material layer has a weight per unit area in a range of 10 g/m$^2$ or more and 300 g/m$^2$ or less.

9. The nonaqueous electrolyte battery according to any one of claims 1 to 8, wherein the negative electrode material layer has a density in a range of 1.5 g/cm$^3$ or more and 3.2 g/cm$^3$ or less.

10. A battery pack comprising the nonaqueous electrolyte battery according to any one of claims 1 to 9.

11. The battery pack according to claim 10, further comprising: an external power distribution terminal; and a protective circuit.

12. The battery pack according to claim 10 or 11, comprising a plurality of nonaqueous electrolyte batteries, the plurality of nonaqueous electrolyte batteries being electrically connected in series, in parallel, or in a combination of in-series and in-parallel.

**Patentansprüche**

1. Batterie mit nichtwässrigem Elektrolyt, umfassend:

   eine positive Elektrode;
   eine negative Elektrode, umfassend eine Negativelektrodenmaterialschicht, umfassend ein Negativelektrodenaktivmaterial, wobei die negative Elektrode ein titanhaltiges Oxid als das Negativelektrodenaktivmaterial umfasst;

einen Separator, der zumindest zwischen der positiven Elektrode und der negativen Elektrode angeordnet ist; und

einen nicht-wässrigen Elektrolyt,

wobei eine logarithmische differentielle Porenvolumenverteilungskurve des Separators nach einem Quecksilberintrusionsverfahren einen ersten Peak und einen zweiten Peak enthält, wobei der erste Peak ein lokaler Maximalwert ist, bei dem ein Porendurchmesser im Bereich von 0,02 $\mu$m oder mehr und 0,15 $\mu$m oder weniger liegt, der zweite Peak ein lokaler Maximalwert ist, bei dem ein Porendurchmesser im Bereich von 1,5 $\mu$m oder mehr und 30 $\mu$m oder weniger liegt, und ein Verhältnis $P2_I/P1_I$ von einer Intensität $P2_I$ des zweiten Peaks zu einer Intensität $P1_I$ des ersten Peaks mehr als 1,00 und nicht mehr als 3,00 beträgt, und

wobei eine spezifische Porenoberfläche des Separators nach dem Quecksilberintrusionsverfahren 70 m$^2$/g oder mehr beträgt.

2. Batterie mit nichtwässrigem Elektrolyt gemäß Anspruch 1, wobei ein Anteil eines kumulativen Porenvolumens von Poren mit einem Porendurchmesser von 1 $\mu$m oder weniger am Gesamtporenvolumen des Separators nach dem Quecksilberintrusionsverfahren 40% oder mehr und 70% oder weniger beträgt.

3. Batterie mit nichtwässrigem Elektrolyt gemäß Anspruch 1 oder 2, wobei die spezifische Porenoberfläche des Separators nach dem Quecksilberintrusionsverfahren 70 m$^2$/g oder mehr und 90 m$^2$/g oder weniger beträgt.

4. Batterie mit nichtwässrigem Elektrolyt gemäß einem der Ansprüche 1 bis 3, wobei der Separator eine Dicke von 6 $\mu$m oder mehr und 12 $\mu$m oder weniger aufweist.

5. Batterie mit nichtwässrigem Elektrolyt gemäß einem der Ansprüche 1 bis 4, wobei der Separator aus einem Cellulose umfassenden Vliesstoff hergestellt ist.

6. Batterie mit nichtwässrigem Elektrolyt gemäß einem der Ansprüche 1 bis 5, wobei das titanhaltige Oxid ein titanhaltiges Oxid mit einer Kristallstruktur enthält, die aus der Gruppe ausgewählt ist, die aus orthorhombischen Kristallstrukturen, Kristallstrukturen vom Spinell-Typ, Kristallstrukturen vom Anatas-Typ, Kristallstrukturen vom Rutil-Typ, Kristallstrukturen vom Bronze-Typ, monoklinen Kristallstrukturen und Ramsdellit-Kristallstrukturen besteht.

7. Batterie mit nichtwässrigem Elektrolyt gemäß einem der Ansprüche 1 bis 6, wobei das titanhaltige Oxid mindestens ein Element umfasst, das aus der Gruppe ausgewählt ist, die aus P, V, Sn, Cu, Ni, Nb und Fe besteht.

8. Batterie mit nichtwässrigem Elektrolyt gemäß einem der Ansprüche 1 bis 7, wobei die Negativelektrodenmaterialschicht ein Gewicht pro Flächeneinheit im Bereich von 10 g/m$^2$ oder mehr und 300 g/m$^2$ oder weniger aufweist.

9. Batterie mit nichtwässrigem Elektrolyt gemäß einem der Ansprüche 1 bis 8, wobei die Negativelektrodenmaterialschicht eine Dichte im Bereich von 1,5 g/cm$^3$ oder mehr und 3,2 g/cm$^3$ oder weniger aufweist.

10. Batteriepack, umfassend die Batterie mit nichtwässrigem Elektrolyt gemäß einem der Ansprüche 1 bis 9.

11. Batteriepack gemäß Anspruch 10, ferner umfassend: einen externen Stromverteilungsanschluss; und eine Schutzschaltung.

12. Batteriepack gemäß Anspruch 10 oder 11, umfassend eine Mehrzahl von Batterien mit nichtwässrigem Elektrolyt, wobei die Mehrzahl von Batterien mit nichtwässrigem Elektrolyt elektrisch in Reihe, parallel oder in einer Kombination aus in Reihe und parallel geschaltet ist.

## Revendications

1. Pile à électrolyte non aqueux comprenant :

une électrode positive ;
une électrode négative comprenant une couche de matériau d'électrode négative comprenant un matériau actif d'électrode négative, l'électrode négative comprenant un oxyde contenant du titane comme le matériau actif d'électrode négative ;

un séparateur positionné au moins entre l'électrode positive et l'électrode négative ; et

un électrolyte non aqueux,

dans lequel une courbe de distribution de volume de pore différentiel logarithmique du séparateur par un procédé d'intrusion de mercure inclut une première crête et une seconde crête, la première crête est une valeur maximum locale où un diamètre de pore est dans une plage de 0,02 µm ou plus et de 0,15 µm ou moins, la seconde crête est une valeur maximum locale où un diamètre de pore est dans une plage de 1,5 µm ou plus et de 30 µm ou moins, et un rapport $P2_l/P1_l$ d'une intensité $P2_l$ de la seconde crête à une intensité $P1_l$ de la première crête est supérieur à 1,00 et n'est pas supérieur à 3,00, et

dans lequel une superficie spécifique de pore du séparateur par le procédé d'intrusion de mercure est de 70 $m^2$/g ou plus.

2. Pile à électrolyte non aqueux selon la revendication 1, dans laquelle une proportion d'un volume de pore cumulatif de pores présentant un diamètre de pore de 1 pm ou moins dans un volume de pore total du séparateur par le procédé d'intrusion de mercure est de 40 % ou plus et de 70 % ou moins.

3. Pile à électrolyte non aqueux selon la revendication 1 ou 2, dans laquelle la superficie spécifique de pore du séparateur par le procédé d'intrusion de mercure est de 70 $m^2$/g ou plus et de 90 $m^2$/g ou moins.

4. Pile à électrolyte non aqueux selon l'une quelconque des revendications 1 à 3, dans laquelle le séparateur présente une épaisseur de 6 µm ou plus et de 12 µm ou moins.

5. Pile à électrolyte non aqueux selon l'une quelconque des revendications 1 à 4, dans laquelle le séparateur est réalisé en un non tissé comprenant de la cellulose.

6. Pile à électrolyte non aqueux selon l'une quelconque des revendications 1 à 5, dans laquelle l'oxyde contenant du titane inclut un oxyde contenant du titane présentant une structure de cristal sélectionnée à partir du groupe constitué de structures de cristal orthorhombique, de type spinelle, de type anatase, de type rutile, de type bronze, monoclinique, et ramsdellite.

7. Pile à électrolyte non aqueux selon l'une quelconque des revendications 1 à 6, dans laquelle l'oxyde contenant du titane comprend au moins un élément sélectionné à partir du groupe constitué de P, V, Sn, Cu, Ni, Nb et Fe.

8. Pile à électrolyte non aqueux selon l'une quelconque des revendications 1 à 7, dans laquelle la couche de matériau d'électrode négative présente un poids par unité de zone dans une plage de 10 g/$m^2$ ou plus et de 300 g/$m^2$ ou moins.

9. Pile à électrolyte non aqueux selon l'une quelconque des revendications 1 à 8, dans laquelle la couche de matériau d'électrode négative présente une densité dans une plage de 1,5 g/$cm^3$ ou plus et de 3,2 g/$cm^3$ ou moins.

10. Bloc de piles comprenant la pile à électrolyte non aqueux selon l'une quelconque des revendications 1 à 9.

11. Bloc de piles selon la revendication 10, comprenant en outre : une borne de distribution de puissance externe ; et un circuit protecteur.

12. Bloc de piles selon la revendication 10 ou 11, comprenant une pluralité de piles à électrolytes non aqueux, la pluralité de piles à électrolytes non aqueux étant reliée électriquement en série, en parallèle, ou dans une combinaison de liaison en série et en parallèle.

F I G. 1

FIG. 2

200

38

23

36

22

36

3

30

100

24

31

26

35

4

4

36

35

28

27

29

37

F I G. 3

F I G. 4

F I G. 5

F I G. 6

## REFERENCES CITED IN THE DESCRIPTION

**Patent documents cited in the description**

- JP 4445537 B

- JP 6258082 B

**Non-patent literature cited in the description**

- **JIMBO GENJI et al.** Fine Particle Handbook. Asakura Shoten, September 1991, 151-152

- **HAYAKAWA SOHACHIRO.** Powder Physical Property Measurement Method. Asakura Shoten, October 1973, 257-259